# EUROPÄISCHE PATENTSCHRIFT

(11) **EP 3 700 977 B1**
(45) Veröffentlichungstag und Bekanntmachung des Hinweises auf die Patenterteilung: **24.02.2021**
(21) Anmeldenummer: 18730675.8
(22) Anmeldetag: 01.06.2018
(51) Int. Cl.: C08L 83/04

(54) **VERNETZBARE MASSEN AUF DER BASIS VON ORGANYLOXYGRUPPEN AUFWEISENDEN ORGANOPOLYSILOXANEN**
CROSSLINKABLE COMPOUNDS BASED ON ORGANYLOXY GROUP-CONTAINING ORGANOPOLYSILOXANES
MASSES RÉTICULABLES À BASE D'ORGANOPOLYSILOXANES COMPORTANT DES GROUPES ORGANYLOXY

(43) Veröffentlichungstag der Anmeldung: 02.09.2020
(73) Patentinhaber: Wacker Chemie AG, 81737 München (DE)
(72) Erfinder: SCHINDLER, Wolfram, 84577 Tüssling (DE)
(74) Vertreter: Budczinski, Angelika
(86) Internationale Anmeldenummer: PCT/EP2018/064471
(87) Internationale Veröffentlichungsnummer: WO 2019/228643

(56) Entgegenhaltungen:
- EP-B1- 1 436 351

## Beschreibung

Die Erfindung betrifft vernetzbare Massen auf der Basis von Organyloxygruppen aufweisenden Organopolysiloxanen, insbesondere mit niedrigen Viskositäten einschließlich solchen mit selbstverlaufenden Eigenschaften, Verfahren zu deren Herstellung sowie deren Verwendung, insbesondere als Beschichtungen oder als Flüssigmembran.

Unter Ausschluss von Wasser lagerfähige, bei Zutritt von Wasser bei Raumtemperatur zu Elastomeren vulkanisierende Einkomponenten-Dichtmassen (RTV-1) sind seit langem bekannt. Diese Produkte werden in großen Mengen zum Beispiel in der Bauindustrie als Dichtstoffe für Anschluss- oder Fassadenfugen eingesetzt oder können als elastische Beschichtungen aufgetragen werden. Die Basis dieser Mischungen sind Polymere, die mit Silylgruppen terminiert sind, die reaktive Substituenten wie OH-Gruppen oder hydrolysierbare Gruppen, wie zum Beispiel Alkoxygruppen, tragen. Des Weiteren können diese Dichtmassen Füllstoffe, Weichmacher, Vernetzer, Katalysatoren sowie Additive enthalten. Hierzu sei beispielsweise auf EP-A 763557, EP-A 1865029 und EP-A 1042400 verwiesen. Alkoxy-RTV-1 Massen sind aufgrund ihrer neutralen und geruchlosen Vernetzung und der sehr guten Haftung auf unterschiedlichen Substraten gegenüber anderen Neutralsystemen bevorzugt. Derartige Alkoxy-RTV-1 Massen sind nicht nur für pastöse Dichtmassen von Interesse, sondern auch als reaktives Beschichtungsmaterial. Diese Formulierungen müssen üblicherweise mittels Pinsel und Roller streichbar oder z.B. über Airless-Spray spritzbar sein. Hier besteht die Herausforderung bei guten Verarbeitungseigenschaften und Viskositäten eine robuste Härtung und ausreichende mechanische Eigenschaften zu gewährleisten. Die einfachste Möglichkeit zur Einstellung der Viskosität ist der Zusatz von Lösungsmitteln. Diese sind aber aufgrund ihrer Brennbarkeit oder auch als VOC unerwünscht. Niederviskose Polymere führen meist zu spröden, brüchigen Massen oder müssen über verstärkende, rheologisch aktive Füllstoffe wieder kompensiert werden. Ein Kompromiss wären Reaktivverdünner - wie beispielsweise funktionelle Alkoxysilane - diese beeinflussen aber in der Regel die Härtung sehr stark oder führen auch zu einer Versprödung des Vulkanisats EP 1 436 351

B1 offenbart vernetzbare Massen auf Basis von alkoxyfunktionellen Organosiliciumverbindungen.

Es bestand nun die Aufgabe, vernetzbare Massen auf der Basis von Organyloxygruppen aufweisenden Organopolysiloxanen bereitzustellen, mit denen möglichst niedrige und einfach einzustellende Viskositäten realisiert werden können bei gleichzeitig robuster Härtung und guten mechanischen Eigenschaften, wobei die Verwendung von Lösungsmitteln oder nicht reaktiven Weichmachern nicht notwendig ist.

Gegenstand der Erfindung sind vernetzbare Massen enthaltend
(A) Organyloxygruppen aufweisende Organopolysiloxane aus Einheiten der Formel (I)

   RₐR¹_{b}(OR²)_{c}SiO_{(4-a-b-c)/2} (I),

   wobei
   R gleich oder verschieden sein kann und einwertige, SiC-gebundene, gegebenenfalls substituierte, von aliphatischen Kohlenstoff-Kohlenstoff-Mehrfachbindungen freie Kohlenwasserstoffreste darstellt,
   R¹ gleich oder verschieden sein kann und einwertige, SiC-gebundene, gegebenenfalls substituierte Kohlenwasserstoffreste mit aliphatischen Kohlenstoff-Kohlenstoff-Mehrfachbindungen bedeutet,
   R² gleich oder verschieden sein kann und einwertige, gegebenenfalls substituierte Kohlenwasserstoffreste, die durch Sauerstoffatome unterbrochen sein können, bedeutet,
   a 0, 1, 2 oder 3 ist,
   b 0 oder 1 ist und
   c 0, 1, 2 oder 3 ist,
   mit der Maßgabe, dass in Formel (I) die Summe a+b+c≤3 ist und in mindestens einer Einheit c verschieden 0 ist,
(B) Organosiliciumverbindungen der Formel (II)

   (R⁴O)_{d}SiR³_{(4-d)} (II),

   wobei
   R³ gleich oder verschieden sein kann und einwertige, SiC-gebundene, aliphatische, gegebenenfalls durch Ethergruppen, Estergruppen, (Poly)glykolresten oder Triorganyloxysilylgruppen substituierte Kohlenwasserstoffreste mit 1 bis 7 Kohlenstoffatomen oder aromatische Reste bedeutet,
   R⁴ gleich oder verschieden sein kann und Wasserstoffatom oder einwertige, gegebenenfalls substituierte Kohlenwasserstoffreste, die durch Sauerstoffatome unterbrochen sein können, bedeutet,
   d 2, 3 oder 4, bevorzugt 3 oder 4, besonders bevorzugt 3, ist und/oder deren Teilhydrolysate,
(C) basischen Stickstoff aufweisende Organosiliciumverbindungen der Formel (III)

   (R⁶O)ₑSiR⁵₍₄₋ₑ₎ (III),

   wobei
   R⁵ gleich oder verschieden sein kann und einwertige, SiC-gebundene Reste mit basischem Stickstoff bedeutet,
   R⁶ gleich oder verschieden sein kann und Wasserstoffatom oder einwertige, gegebenenfalls substituierte Kohlenwasserstoffreste, die durch Sauerstoffatome unterbrochen sein können, bedeutet,
   e 2 oder 3, bevorzugt 3, ist,
   und/oder deren Teilhydrolysate
   und
(D) Organosiliciumverbindungen der Formel (IV)

   (R⁸O)ₕSiR⁷₍₄₋ₕ₎ (IV),

   wobei
   R⁷ gleich oder verschieden sein kann und einwertige, SiC-gebundene, aliphatische, gegebenenfalls mit Ethergruppen, Estergruppen, (Poly)glykolresten oder Triorganyloxysilylgruppen substituierte Kohlenwasserstoffreste mit mindestens 8 Kohlenstoffatomen bedeutet,
   R⁸ gleich oder verschieden sein kann und Wasserstoffatom oder einwertige, gegebenenfalls substituierte Kohlenwasserstoffreste, die durch Sauerstoffatome unterbrochen sein können, bedeutet,
   h 2 oder 3, bevorzugt 3, ist,
   und/oder deren Teilhydrolysate.

Im Rahmen der vorliegenden Erfindung sollen von dem Begriff Organopolysiloxane sowohl polymere, oligomere wie auch dimere Siloxane mitumfasst werden.

Bei den vernetzbaren Massen handelt es sich bevorzugt um durch Kondensationsreaktion vernetzbare Massen.

Im Rahmen der vorliegenden Erfindung soll die Bezeichnung "Kondensationsreaktion" auch einen gegebenenfalls vorangehenden Hydrolyseschritt mitumfassen.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Methoxyethyl-, Ethoxyethyl-, Ethoxyethoxyethylrest oder Polyoxyalkylreste wie Polyethylenglykol- oder Polypropylenglycolreste.

Bevorzugt handelt es sich bei Rest R um einwertige, von aliphatischen Kohlenstoff-Kohlenstoff-Mehrfachbindungen freie Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, besonders bevorzugt um einwertige, von aliphatischen Kohlenstoff-Kohlenstoff-Mehrfachbindungen freie Kohlenwasserstoffreste mit 1 bis 12 Kohlenstoffatomen, insbesondere um den Methylrest.

Beispiele für Reste R¹ sind Alkenylreste, wie lineare oder verzweigte 1-Alkenylreste wie der Vinylrest und 1-Propenylrest sowie der 2-Propenylrest.

Bevorzugt handelt es sich bei Rest R¹ um einwertige, aliphatische Kohlenstoff-Kohlenstoff-Mehrfachbindungen aufweisende Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, besonders bevorzugt um einwertige, aliphatische Kohlenstoff-Kohlenstoff-Mehrfachbindungen aufweisende Kohlenwasserstoffreste mit 1 bis 12 Kohlenstoffatomen, insbesondere um den Vinylrest.

Beispiele für Reste R² sind die für R und R¹ angegebenen einwertigen Reste.

Bevorzugt handelt es sich bei Rest R² um einwertige, gegebenenfalls substituierte Kohlenwasserstoffreste mit 1 bis 12 Kohlenstoffatomen, die durch Sauerstoffatome unterbrochen sein können, besonders bevorzugt um Alkylreste mit 1 bis 6 Kohlenstoffatomen, insbesondere um den Methyl- oder Ethylrest, ganz besonders bevorzugt um den Methylrest.

Vorzugsweise handelt es sich bei erfindungsgemäß eingesetzten Organopolysiloxanen (A) um solche aus Einheiten der Formel (I) mit mindestens einer Einheit, in der b und c verschieden 0 sind.

Bevorzugt handelt es sich bei erfindungsgemäß eingesetzten Organopolysiloxanen (A) um im Wesentlichen lineare, organyloxyterminierte Organopolysiloxane, besonders bevorzugt um solche der Formel (V)

(OR²)_{3-f}R¹_{f}Si-(SiR₂-O)_{g}-SiR¹_{f}(OR²)_{3-f} (V),

wobei
R, R¹ und R² jeweils gleich oder verschieden sein können und eine der oben angegebenen Bedeutungen haben,
g gleich 30 bis 5000 ist und
f gleich 0, 1 oder 2, bevorzugt 1, ist,
mit der Maßgabe, dass in Formel (V) in mindestens einer Einheit f verschieden 0 ist.

Obwohl in Formel (V) nicht angegeben, können die erfindungsgemäß eingesetzten Organopolysiloxane (A) der Formel (V) herstellungsbedingt einen geringen Anteil an Verzweigungen, bevorzugt bis maximal 500 ppm aller Si-Einheiten, insbesondere keine, aufweisen.

Obwohl in den Formeln (I) und (V) nicht angegeben, können die erfindungsgemäß eingesetzten Organopolysiloxane (A) herstellungsbedingt einen geringen Anteil von Hydroxylgruppen, bevorzugt bis maximal 5 % aller Si-gebundenen Reste, aufweisen.

Bevorzugte Beispiele für Organopolysiloxane (A) sind
(MeO)₂MeSiO[SiMe₂O]₂₀₀₋₂₀₀₀SiMe(OMe)₂,
(MeO)₂MeSiO[SiMe₂O]₂₀₀₋₂₀₀₀SiVi(OMe)₂,
(MeO)₂ViSiO[SiMe₂O]₂₀₀₋₂₀₀₀SiVi(OMe)₂,
(MeO)₂MeSiO[SiMe₂O]₂₀₀₋₂₀₀₀SiViMe(OMe),
(MeO)ViMeSiO[SiMe₂O]₂₀₀₋₂₀₀₀SiViMe(OMe) oder
(MeO)ViMeSiO [SiMe₂O]₂₀₀₋₂₀₀₀SiVi(OMe)₂, wobei
(MeO)₂MeSiO[SiMe₂O]₂₀₀₋₂₀₀₀SiVi(OMe)₂ oder
(MeO)₂ViSiO[SiMe₂O]₂₀₀₋₂₀₀₀SiVi(OMe)₂ besonders bevorzugt sind, insbesondere (MeO)₂ViSiO[SiMe₂O]₂₀₀₋₂₀₀₀SiVi(OMe)₂.

Die erfindungsgemäß eingesetzten Organopolysiloxane (A) haben eine Viskosität von bevorzugt 1000 bis 10⁶ mPas, besonders bevorzugt 1000 bis 10⁵ mPas, insbesondere 1000 bis 50000 mPas, jeweils bei 25°C.

Bei den Organopolysiloxanen (A) handelt es sich um handelsübliche Produkte bzw. können diese nach in der Siliciumchemie gängigen Methoden vor der Abmischung hergestellt und isoliert werden.

Beispiele für Reste R³ sind die für R und R¹ angegebenen einwertigen Reste.

Bevorzugt handelt es sich bei Rest R³ um einwertige, gegebenenfalls mit Ethergruppen, Estergruppen, (Poly)glykolresten oder Triorganyloxysilylgruppen substituierte, aliphatische Kohlenwasserstoffreste mit 1 bis 7 Kohlenstoffatomen oder gegebenenfalls mit Ethergruppen, Estergruppen, (Poly)glykolresten oder Triorganyloxysilylgruppen substituierte aromatische Kohlenwasserstoffreste, besonders bevorzugt um Alkylreste mit 1 bis 7 Kohlenstoffatomen oder Alkenylreste mit 1 bis 7 Kohlenstoffatomen oder aromatische Kohlenwasserstoffreste, insbesondere um den Methyl- oder den Vinylrest.

Beispiele für Reste R⁴ sind Wasserstoffatom sowie die für R und R¹ angegebenen einwertigen Reste.

Bevorzugt handelt es sich bei Rest R⁴ um einwertige, gegebenenfalls substituierte Kohlenwasserstoffreste mit 1 bis 12 Kohlenstoffatomen, die durch Sauerstoffatome unterbrochen sein können, besonders bevorzugt um Alkylreste mit 1 bis 6 Kohlenstoffatomen, insbesondere um den Methyl- oder Ethylrest, ganz besonders bevorzugt um den Ethylrest.

Bevorzugt handelt es sich bei den in den erfindungsgemäßen Massen eingesetzten Organosiliciumverbindungen (B) um Silane mit mindestens einem Methoxy- oder Ethoxyrest und/oder deren Teilhydrolysate, besonders bevorzugt um Tetraethoxysilan, Methyltrimethoxysilan, Methyltriethoxysilan, Vinyltrimethoxysilan, Vinyltriethoxysilan, Vinyl-methyldimethoxysilan, Vinyl-methyldiethoxysilan, Phenyl-trimethoxysilan, Phenyltriethoxysilan oder 1,2-Bis(triethoxysilyl)ethan und/oder deren Teilhydrolysate, insbesondere um Tetraethoxysilan, Methyltrimethoxysilan, Vinyltrimethoxysilan oder Vinyltriethoxysilan und/oder deren Teilhydrolysate, ganz besonders bevorzugt um Methyltrimethoxysilan, Vinyltrimethoxysilan oder Vinyltriethoxysilan und/oder deren Teilhydrolysate, insbesondere bevorzugt um Vinyltriethoxysilan und/oder dessen Teilhydrolysate.

Bei den Teilhydrolysaten (B) kann es sich dabei um Teilhomohydrolysate handeln, d.h. Teilhydrolysate von einer Art von Organosiliciumverbindung der Formel (II), wie auch um Teilcohydrolysate, d.h. Teilhydrolysate von mindestens zwei verschiedenen Arten von Organosiliciumverbindungen der Formel (II).

Handelt es sich bei den in den erfindungsgemäßen Massen eingesetzten Verbindungen (B) um Teilhydrolysate von Organosiliciumverbindungen der Formel (II), so sind solche mit bis zu 10 Siliciumatomen bevorzugt.

Die in den erfindungsgemäßen Massen gegebenenfalls eingesetzten Verbindungen (B) sind handelsübliche Produkte bzw. können nach in der Siliciumchemie bekannten Verfahren hergestellt werden.

Die erfindungsgemäßen Massen enthalten Komponente (B) in Mengen von vorzugsweise 0,5 bis 15,0 Gewichtsteilen, besonders bevorzugt 0,5 bis 10,0 Gewichtsteilen, insbesondere 1,0 bis 5,0 Gewichtsteilen, jeweils bezogen auf 100 Gewichtsteile Organopolysiloxane (A).

Beispiele für Reste R⁵ sind Reste der Formeln H₂NCH₂-, H₂N(CH₂)₂-, H₂N(CH₂)₃-, H₂N(CH₂)₂NH(CH₂)₂-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃- und (C₂H₅)₂N(CH₂)₂-.

Bevorzugt handelt es sich bei Rest R⁵ um H₂N(CH₂)₃-, H₂N(CH₂)₂NH(CH₂)₃-, H₃CNH(CH₂)₃-, C₂H₅NH(CH₂)₃- oder cyclo-C₆H₁₁NH(CH₂)₃-Rest, insbesondere um den H₂N(CH₂)₂NH(CH₂)₃-Rest.

Beispiele für Rest R⁶ sind Wasserstoffatom sowie die für Rest R² angegebenen Beispiele.

Bevorzugt handelt es sich bei Rest R⁶ um einwertige, gegebenenfalls substituierte Kohlenwasserstoffreste mit 1 bis 12 Kohlenstoffatomen, die durch Sauerstoffatome unterbrochen sein können, besonders bevorzugt um Alkylreste mit 1 bis 6 Kohlenstoffatomen, insbesondere um den Methyl- oder Ethylrest.

Bevorzugt handelt es sich bei den Organosiliciumverbindungen (C) um 3-Aminopropyl-trimethoxysilan, 3-Aminopropyl-triethoxysilan, 3-Aminopropyl-methyldimethoxysilan, 3-Aminopropyl-methyldiethoxysilan, N-(2-Aminoethyl)-3-aminopropyl-trimethoxysilan, N-(2-Aminoethyl)-3-aminopropyl-triethoxysilan, N-(2-Aminoethyl)-3-aminopropyl-methyldimethoxysilan, N-Phenyl-3-aminopropyl-trimethoxysilan, N-Phenyl-3-aminopropyl-methyldimethoxysilan, N-Phenyl-3-aminopropyl-triethoxysilan oder N-Phenyl-3-aminopropyl-methyldiethoxysilan oder weitere N-Alkyl- oder N,N-Dialkyl-Derivate des 3-Aminopropyl-trimethoxysilans, 3-Aminopropyl-triethoxysilans, 3-Aminopropyl-methyldimethoxysilans oder 3-Aminopropyl-methyldiethoxysilans und/oder deren Teilhydrolysate, wobei es sich bei den genannten N-Alkylresten vorzugsweise um Methyl-, Ethyl-, n-Propyl-, i-Propyl-, n-Butyl-, i-Butyl-, t-Butyl-, Cyclohexyl- oder die verschiedenen verzweigten oder unverzweigten Pentyl- oder Hexylreste handelt.

Besonders bevorzugt handelt es sich bei den Verbindungen (C) um 3-Aminopropyl-trimethoxysilan, 3-Aminopropyl-triethoxysilan, N-(2-Aminoethyl)-3-aminopropyl-trimethoxysilan oder N-(2-Aminoethyl)-3-aminopropyl-triethoxysilan, insbesondere um N-(2-Aminoethyl)-3-aminopropyl-trimethoxysilan oder N-(2-Aminoethyl)-3-aminopropyl-triethoxysilan.

Die in den erfindungsgemäßen Massen eingesetzten Verbindungen (C) sind handelsübliche Produkte bzw. können nach in der Siliciumchemie bekannten Verfahren hergestellt werden.

Die erfindungsgemäßen Massen enthalten Komponente (C) in Mengen von vorzugsweise 0,5 bis 15,0 Gewichtsteilen, besonders bevorzugt 0,5 bis 10,0 Gewichtsteilen, insbesondere 0,5 bis 5,0 Gewichtsteilen, jeweils bezogen auf 100 Gewichtsteile Organopolysiloxane (A).

In den erfindungsgemäßen Massen liegt das Gewichtsverhältnis von Komponente (B) zu Komponente (C) bevorzugt im Bereich von 2:1 bis 1:2, besonders bevorzugt im Bereich von 3:2 bis 2:3.

Beispiele für Reste R⁷ sind die für R und R¹ angegebenen einwertigen aliphatischen Reste mit mindestens 8 Kohlenstoffatomen.

Bevorzugt handelt es sich bei Rest R⁷ um einwertige, gegebenenfalls mit Ethergruppen, Estergruppen, (Poly)glykolresten oder Triorganyloxysilylgruppen substituierte, aliphatische Kohlenwasserstoffreste mit mindestens 8 Kohlenstoffatomen, besonders bevorzugt um einwertige, gegebenenfalls mit Ethergruppen, Estergruppen, (Poly)glykolresten oder Triorganyloxysilylgruppen substituierte, aliphatische Kohlenwasserstoffreste mit 8 bis 18 Kohlenstoffatomen, insbesondere um aliphatische Kohlenwasserstoffreste mit 8 bis 16 Kohlenstoffatomen, ganz besonders bevorzugt um Alkylreste mit 8 bis 16 Kohlenstoffatomen.

Beispiele für Reste R⁸ sind Wasserstoffatom sowie die für R und R¹ angegebenen einwertigen Reste.

Bevorzugt handelt es sich bei Rest R⁸ um einwertige, gegebenenfalls substituierte Kohlenwasserstoffreste mit 1 bis 12 Kohlenstoffatomen, die durch Sauerstoffatome unterbrochen sein können, besonders bevorzugt um Alkylreste mit 1 bis 6 Kohlenstoffatomen, insbesondere um den Methyl- oder Ethylrest, ganz besonders bevorzugt um den Ethylrest.

Bevorzugt weist Organosiliciumverbindung (D) mindestens einen Rest R⁸ mit mindestens zwei Kohlenstoffatomen auf.

Bevorzugt handelt es sich bei den in den erfindungsgemäßen Massen eingesetzten Organosiliciumverbindungen (D) um Hexadecyltrimethoxysilan, Hexadecyl-triethoxysilan, n-Octyltrimethoxysilan, n-Ooctyltriethoxysilan, Isooctyltrimethoxysilan oder Isooctyltriethoxysilan und/oder deren Teilhydrolysate, besonders bevorzugt um n-Ooctyltriethoxysilan oder Isooctyltriethoxysilan.

Bei den Teilhydrolysaten (D) kann es sich dabei um Teilhomohydrolysate handeln, d.h. Teilhydrolysate von einer Art von Organosiliciumverbindung der Formel (IV), wie auch um Teilcohydrolysate, d.h. Teilhydrolysate von mindestens zwei verschiedenen Arten von Organosiliciumverbindungen der Formel (IV).

Handelt es sich bei den in den erfindungsgemäßen Massen eingesetzten Verbindungen (D) um Teilhydrolysate von Organosiliciumverbindungen der Formel (IV), so sind solche mit bis zu 10 Siliciumatomen bevorzugt.

Die in den erfindungsgemäßen Massen gegebenenfalls eingesetzten Verbindungen (D) sind handelsübliche Produkte bzw. können nach in der Siliciumchemie bekannten Verfahren hergestellt werden.

Die erfindungsgemäßen Massen enthalten Komponente (D) in Mengen von vorzugsweise 5 bis 100 Gewichtsteilen, besonders bevorzugt 10 bis 80 Gewichtsteilen, insbesondere 20 bis 50 Gewichtsteilen, jeweils bezogen auf 100 Gewichtsteile Organopolysiloxane (A) .

Zusätzlich zu den Komponenten (A), (B), (C) und (D) können die erfindungsgemäßen Massen nun alle weiteren Stoffe enthalten, die auch bisher in durch Kondensationsreaktion vernetzbaren Massen eingesetzt worden sind, wie z.B. (E) Füllstoffe, (F) Katalysatoren, (G) Stabilisatoren, (H) Additive und (J) Weichmacher.

Beispiele für Füllstoffe (E) sind nicht verstärkende Füllstoffe, also Füllstoffe mit einer BET-Oberfläche von bis zu 50 m²/g, wie unbeschichtete Calciumcarbonate, beschichtete Calciumcarbonate, Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Gips, Siliciumnitrid, Siliciumcarbid, Bornitrid oder Glas- und Kunststoffpulver, wie Polyacrylnitrilpulver. Beispiele für verstärkende Füllstoffe, also Füllstoffe mit einer BET-Oberfläche von mehr als 50 m²/g sind pyrogen hergestellte Kieselsäure, gefällte Kieselsäure, Ruße, wie Furnace- und Acetylenruß und Silicium-Aluminium-Mischoxide großer BET-Oberfläche. Ferner können auch faserförmige Füllstoffe wie Asbest oder Kunststofffasern verwendet werden. Die genannten Füllstoffe können hydrophobiert sein, beispielsweise durch die Behandlung mit Organosilanen bzw. -siloxanen, Stearinsäurederivat oder durch Veretherung von Hydroxylgruppen zu Alkoxygruppen.

Falls Füllstoffe (E) eingesetzt werden, handelt es sich bevorzugt um unbehandelte Calciumcarbonate, hydrophile, pyrogen hergestellte Kieselsäure oder hydrophobe, pyrogen hergestellte Kieselsäure.

Falls die erfindungsgemäßen Massen Füllstoffe (E) enthalten, handelt es sich um Mengen von vorzugsweise 10 bis 500 Gewichtsteilen, bevorzugt 10 bis 200 Gewichtsteilen, besonders bevorzugt 50 bis 200 Gewichtsteilen, jeweils bezogen auf 100 Gewichtsteile Organopolysiloxan (A).

Als Katalysator (F) können alle Härtungsbeschleuniger, die auch bisher in durch Kondensationsreaktion vernetzbare Massen eingesetzt werden, verwendet werden. Beispiele für gegebenenfalls eingesetzte Katalysatoren (F) sind organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen und organofunktionellen Alkoxysilane, wie Tetraethoxysilan und Aminopropyl-triethoxysilan, bevorzugt sind Di-n-butylzinndilaurat, Dioctylzinndilaurat, Umsetzungsprodukte von Dibutyl- und Dioctylzinnoxid mit Tetraethylsilikat-Hydrolysat oder Mischhydrolysaten mit Aminopropylsilanen, insbesondere bevorzugt Di-n-butylzinnoxid in Tetraethylsilikat-Hydrolysat.

Falls die erfindungsgemäßen Massen Katalysatoren (F) enthalten, was bevorzugt ist, handelt es sich um Mengen von vorzugsweise 0,01 bis 3 Gewichtsteilen, bevorzugt 0,05 bis 2 Gewichtteilen, jeweils bezogen auf 100 Gewichtsteile Organopolysiloxan (A).

Bevorzugte Beispiele für Stabilisatoren (G) sind Phosphorsäure, Phosphonsäuren, Phosphonsäure-alkylester oder Phosphorsäurealkylester.

Falls die erfindungsgemäßen Massen Stabilisatoren (G) enthalten, was bevorzugt ist, handelt es sich um Mengen von vorzugsweise 0,01 bis 100 Gewichtsteilen, besonders bevorzugt 0,1 bis 30 Gewichtsteilen, insbesondere 0,3 bis 10 Gewichtsteilen, jeweils bezogen auf 100 Gewichtsteilen Organopolysiloxan (A).

Beispiele für Additive (H) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Fungizide, Hitzestabilisatoren, Scavenger, wie Si-N enthaltende Silazane oder Silylamide, Cokatalysatoren, Thixotropiermittel, wie beispielsweise Polyethylen-, Polypropylenglycole oder Copolymere daraus, organische Lösungsmittel, wie Alkylaromaten, Paraffinöle, sowie beliebige Siloxane, die unterschiedlich zu Komponente (A) sind.

Bevorzugt werden zur Herstellung der erfindungsgemäßen Massen keine organischen Lösungsmittel (H) eingesetzt.

Falls die erfindungsgemäßen Massen Additive (H) enthalten, handelt es sich um Mengen von vorzugsweise 0,01 bis 100 Gewichtsteilen, besonders bevorzugt 0,1 bis 30 Gewichtsteilen, insbesondere 0,3 bis 10 Gewichtsteilen, jeweils bezogen auf 100 Gewichtsteile Organopolysiloxan (A).

Beispiele für gegebenenfalls eingesetzte Weichmacher (J) sind bei Raumtemperatur und einem Druck von 1013 hPa flüssige, mit Trimethylsiloxygruppen terminierte Dimethylpolysiloxane, insbesondere mit Viskositäten bei 25°C im Bereich zwischen 20 und 5000 mPas, bei Raumtemperatur und einem Druck von 1013 hPa flüssige Organopolysiloxane, die im Wesentlichen aus SiO_{3/2}-, SiO_{2/2}- und SiO_{1/2}-Einheiten, sogenannte T-, D- und M-Einheiten, bestehen, sowie hochsiedende Kohlenwasserstoffe, wie beispielsweise Paraffinöle oder Mineralöle bestehend im Wesentlichen aus naphthenischen und paraffinischen Einheiten.

Bevorzugt handelt es sich bei dem gegebenenfalls eingesetzten Weichmacher (J) um lineare Polydimethylsiloxane mit Trimethylsilylendgruppen.

Falls die erfindungsgemäßen Massen Weichmacher (J) enthalten, handelt es sich um Mengen von vorzugsweise 10 bis 300 Gewichtsteilen, besonders bevorzugt 10 bis 1500 Gewichtsteilen, insbesondere 10 bis 50 Gewichtsteilen, jeweils bezogen auf 100 Gewichtsteile Organopolysiloxan (A). Bevorzugt enthalten die erfindungsgemäßen Massen keine Weichmacher (J).

Vorzugsweise handelt es sich bei den erfindungsgemäßen Massen um solche enthaltend
(A) Organopolysiloxane aus Einheiten der Formel (I),
(B) Organosiliciumverbindungen der Formel (II) mit mindestens einem R⁴ gleich Methyl- oder Ethylrest und/oder deren Teilhydrolysate,
(C) basischen Stickstoff aufweisende Organosiliciumverbindungen der Formel (III) und/oder deren Teilhydrolysate,
(D) Organosiliciumverbindungen der Formel (IV) mit mindestens einem R⁸ gleich Ethylrest und/oder deren Teilhydrolysate,
   gegebenenfalls (E) Füllstoffe,
   gegebenenfalls (F) Katalysatoren,
   gegebenenfalls (G) Stabilisatoren,
   gegebenenfalls (H) Additive und
   gegebenenfalls (J) Weichmacher.

### Bevorzugt handelt es sich bei den erfindungsgemäßen Massen um solche enthaltend

(A) Organopolysiloxane aus Einheiten der Formel (I) mit mindestens einer Einheit, in der b und c verschieden 0 sind,
(B) Organosiliciumverbindungen der Formel (II) mit mindestens einem R⁴ gleich Methyl- oder Ethylrest und/oder deren Teilhydrolysate,
(C) basischen Stickstoff aufweisende Organosiliciumverbindungen der Formel (III) und/oder deren Teilhydrolysate,
(D) Organosiliciumverbindungen der Formel (IV) mit mindestens einem R⁸ gleich Ethylrest und/oder deren Teilhydrolysate, gegebenenfalls (E) Füllstoffe,
   gegebenenfalls (F) Katalysatoren,
   gegebenenfalls (G) Stabilisatoren,
   gegebenenfalls (H) Additive und
   gegebenenfalls (J) Weichmacher.

### Besonders bevorzugt handelt es sich bei den erfindungsgemäßen Massen um solche enthaltend

(A) Organopolysiloxane der Formel (V) mit R¹ gleich Vinylrest,
(B) Organosiliciumverbindungen der Formel (II) mit mindestens einem R⁴ gleich Methyl- oder Ethylrest und/oder deren Teilhydrolysate,
(C) basischen Stickstoff aufweisende Organosiliciumverbindungen der Formel (III) ausgewählt aus N-(2-Aminoethyl)-3-aminopropyl-trimethoxysilan und N-(2-Aminoethyl)-3-aminopropyl-triethoxysilan und deren Teilhydrolysate,
(D) Organosiliciumverbindungen der Formel (IV) mit R⁷ gleich einem Alkylrest mit 8 bis 16 Kohlenstoffatomen und mindestens einem R⁸ gleich Ethylrest und/oder deren Teilhydrolysate, gegebenenfalls (E) Füllstoffe,
   gegebenenfalls (F) Katalysatoren,
(G) Stabilisatoren,
   gegebenenfalls (H) Additive und
(J) Weichmacher,
   mit der Maßgabe, dass das Gewichtsverhältnis von Komponente (B) zu Komponente (C) vorzugsweise im Bereich von 2:1 bis 1:2 liegt.

Insbesondere handelt es sich bei den erfindungsgemäßen Massen um solche enthaltend
(A) Organopolysiloxane ausgewählt aus den Verbindungen
   (MeO)₂MeSiO[SiMe₂O]₂₀₀₋₂₀₀₀SiVi(OMe)₂
   (MeO)₂ViSiO[SiMe₂O]₂₀₀₋₂₀₀₀SiVi(OMe)₂,
   (MeO)₂MeSiO[SiMe₂O]₂₀₋₂₀₀₀SiViMe(OMe),
   (MeO)ViMeSiO[SiMe₂O]₂₀₀₋₂₀₀₀SiViMe(OMe) und
   (MeO)ViMeSiO[SiMe₂O]₂₀₀₋₂₀₀₀SiVi(OMe)₂,
(B) Organosiliciumverbindungen ausgewählt aus den Verbindungen Tetraethoxysilan, Methyltrimethoxysilan, Methyltriethoxysilan, Vinyltrimethoxysilan, Vinyltriethoxysilan, Vinyl-methyldimethoxysilan, Vinyl-methyldiethoxysilan, Phenyl-trimethoxysilan, Phenyltriethoxysilan und 1,2-Bis(triethoxysilyl)ethan und deren Teilhydrolysate,
(C) basischen Stickstoff aufweisende organosiliciumverbindungen ausgewählt aus N-(2-Aminoethyl)-3-aminopropyl-trimethoxysilan und N-(2-Aminoethyl)-3-aminopropyl-triethoxysilan und deren Teilhydrolysate,
(D) Organosiliciumverbindungen der Formel (IV) mit R⁷ gleich einem Alkylrest mit 8 bis 16 Kohlenstoffatomen und R⁸ gleich Ethylrest und/oder deren Teilhydrolysate, gegebenenfalls (E) Füllstoffe,
(F) Katalysatoren,
(G) Stabilisatoren,
   gegebenenfalls (H) Additive und
(J) Weichmacher,
   mit der Maßgabe, dass das Gewichtsverhältnis von Komponente (B) zu Komponente (C) vorzugsweise im Bereich von 2:1 bis 1:2 liegt.

In einer weiteren insbesondere bevorzugten Ausführungsform handelt es sich bei den erfindungsgemäßen Massen um solche enthaltend
(A) Organopolysiloxane ausgewählt aus den Verbindungen
   (MeO)₂MeSiO[SiMe₂O]₂₀₀₋₂₀₀₀SiVi(OMe)₂ und
   (MeO)₂ViSiO[SiMe₂O]₂₀₋₂₀₀₀SiVi(OMe)₂,
(B) Organosiliciumverbindungen ausgewählt aus den Verbindungen Tetraethoxysilan, Methyltrimethoxysilan, Vinyltrimethoxysilan und Vinyltriethoxysilan sowie deren Teilhydrolysate,
(C) basischen Stickstoff aufweisende Organosiliciumverbindungen ausgewählt aus N-(2-Aminoethyl)-3-aminopropyl-trimethoxysilan und N-(2-Aminoethyl)-3-aminopropyl-triethoxysilan und deren Teilhydrolysate,
(D) Organosiliciumverbindungen der Formel (IV) mit R⁷ gleich einem Alkylrest mit 8 bis 16 Kohlenstoffatomen und R⁸ gleich Ethylrest und/oder deren Teilhydrolysate, gegebenenfalls (E) Füllstoffe,
(F) Katalysatoren,
(G) Stabilisatoren,
   gegebenenfalls (H) Additive und
(J) Weichmacher,
   mit der Maßgabe, dass das Gewichtsverhältnis von Komponente (B) zu Komponente (C) vorzugsweise im Bereich von 2:1 bis 1:2 liegt.

In einer weiteren ganz besonders bevorzugten Ausführungsform handelt es sich bei den erfindungsgemäßen Massen um solche enthaltend
(A) (MeO)₂ViSiO[SiMe₂O]₂₀₀₋₂₀₀₀SiVi(OMe)₂,
(B) Vinyltriethoxysilan und/oder dessen Teilhydrolysate,
(C) basischen Stickstoff aufweisende Organosiliciumverbindungen ausgewählt aus N-(2-Aminoethyl)-3-aminopropyl-trimethoxysilan und N-(2-Aminoethyl)-3-aminopropyl-triethoxysilan und deren Teilhydrolysate,
(D) Organosiliciumverbindungen der Formel (IV) mit R⁷ gleich n- oder iso-Octylrest und R⁸ gleich Ethylrest und/oder deren Teilhydrolysate,
   gegebenenfalls (E) Füllstoffe,
(F) Katalysatoren,
(G) Stabilisatoren,
   gegebenenfalls (H) Additive und
(J) Weichmacher,
   mit der Maßgabe, dass das Gewichtsverhältnis von Komponente (B) zu Komponente (C) vorzugsweise im Bereich von 3:2 bis 2:3 liegt.

Bevorzugt enthalten die erfindungsgemäßen Massen keine über die Komponenten (A) bis (J) hinausgehende weitere Bestandteile.

Bevorzugt enthalten die erfindungsgemäßen Massen organische Lösungsmittel in Mengen von maximal 10 Gewichtsteilen, bezogen auf das Gesamtgewicht der Masse, besonders bevorzugt keine. Falls die erfindungsgemäßen Massen geringe Mengen an organischen Lösungsmitteln enthalten, handelt es sich bevorzugt um Alkohole, die bei der Hydrolyse- bzw. Kondensationsreaktion entstehen.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Bei den erfindungsgemäßen Massen handelt es sich um flüssige oder viskose Mischung, bevorzugt um dünnflüssige Massen.

Die erfindungsgemäßen Massen weisen Viskositäten von bevorzugt kleiner 50000 mPas, besonders bevorzugt kleiner 25000 mPas und insbesondere kleiner 15000 mPas auf, jeweils gemessen nach DIN EN ISO 3219 mit einem Platte-/Kegelsystem bei 25°C und einer Scherrate von 25 1/s.

Zur Bereitung der erfindungsgemäßen Massen können alle Bestandteile in beliebiger Reihenfolge miteinander vermischt werden.

Ein weiterer Gegenstand der vorliegenden Erfindung ist ein Verfahren zur Herstellung der erfindungsgemäßen Massen durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 100°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Bevorzugt werden die Komponenten (A), (B), (C), (D) und gegebenenfalls Weichmacher (J), bevorzugt ein trimethylsilyl-terminiertes Organopolysiloxan, vermischt. Dies kann unter dem Druck der Atmosphäre oder auch unter vermindertem Druck geschehen. Anschließend können Füllstoffe (E) eingemischt und unter stärkerer Scherung bei höheren Drehzahlen im Mischer dispergiert werden. Dies geschieht in der Regel unter vermindertem Druck, um flüchtige Verbindungen, Luft und Reaktionsprodukte der Feuchtigkeit der Füllstoffe mit den Komponenten (B) und (C) zu entfernen. Weitere Bestandteile, wie Stabilisatoren (G) oder Additive (H), können vor oder mit den Füllstoffen (E) zugegeben werden. Falls Katalysator (F) eingesetzt wird, wird dieser abschließend homogen eingerührt. Dies geschieht in der Regel unter vermindertem Druck, um die flüssigen bis zähflüssigen Massen blasenfrei zu machen.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -20° bis 15°C oder bei 30°C bis 60°C und/oder mittels den normalen Wassergehalt der Luft übersteigenden Konzentrationen von Wasser durchgeführt werden. Auch das direkte Zumischen von Wasser oder wasserhaltigen Substanzen ist möglich.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Bei den erfindungsgemäßen Formkörpern handelt es sich bevorzugt um Beschichtungen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich ausgezeichnet beispielsweise als Beschichtungsmittel für Beton, Holz, Stahl- und Aluminium. Die Beschichtungen können mittels Pinsel oder Roller aufgetragen oder auch aufgesprüht werden, z.B. mittels Airless-Spray. Die Abdichtmassen werden dabei bevorzugt in Schichtdicken von 0,5 mm bis 2 mm direkt in einer Schicht oder auch in mehreren Schichten übereinander appliziert. Ferner können sie auch in einem Zweischichtverfahren mit Vlieseinlage verarbeitet werden. Die Massen können dabei horizontal oder auch vertikal angewendet werden. Die elastischen Schutzüberzüge zeigen besondere Beständigkeit gegen die Einwirkung von Sonnenlicht, Regenwasser, Süß- oder Meerwasser. Ferner weisen die Schutzüberzüge auch hohe thermische Stabilität auf.

Die erfindungsgemäßen Massen haben den Vorteil, dass sie leicht herzustellen sind und sich durch eine sehr hohe Lagerstabilität auszeichnen.

Des Weiteren haben die erfindungsgemäßen Massen den Vorteil, dass sie eine sehr gute Handhabbarkeit bei der Anwendung zeigen und bei einer Vielzahl von Applikation ausgezeichnete Verarbeitungseigenschaften zeigen.

Ferner haben die erfindungsgemäßen Massen den Vorteil, dass sie bei der Aushärtung keine höheren Schrumpfraten aufweisen, speziell verglichen mit Lösungsmitteln oder andere Verdünner enthaltenden Formulierungen.

Die erfindungsgemäßen Massen haben den Vorteil, dass sie auch unter unterschiedlichen klimatischen Bedingungen gut aushärten. Damit ist die Vernetzung unabhängiger von der Umgebungstemperatur und der Luftfeuchtigkeit. Gleichzeitig bilden die erfindungsgemäßen Massen ausreichend schnell eine sog. innere Festigkeit aus (Kohäsion), die verhindert, dass die teilvulkanisierten Massen z.B. durch Schrumpf oder durch Bewegungen im Untergrund aufreißen oder Blasen bilden und damit ihre Dichtfunktion verlieren würden.

Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Komponenten bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Die Hautbildungszeiten werden an 0,5 cm bis 1 cm dick aufgetragenen Folien bestimmt, in dem man mit einem frisch gespitzten Bleistift der Härte HB in regelmäßigen Abständen die Oberfläche im flachen Winkel berührt. Bleibt dabei nach langsamem Hochziehen kein Material mehr an der Bleistiftspitze hängen und eine feine Haut zieht sich ab, wird die Zeit notiert. Nach einem Tag wird die Qualität der Vulkanisation auch noch anhand der Klebrigkeit der Oberfläche und der Einreißfestigkeit der Vulkanisate (sog. Fingernageltest) überprüft.

Die Viskosität- und Thixotropiebestimmung wird an einem Rotationsviskosimeter nach DIN EN ISO 3219 durchgeführt. Zuerst bestimmt man die Viskosität bei einer hohen und anschließend bei einer niedrigen Scherbeanspruchung. Gemessen wird am Platte-/Kegelsystem bei 25°C, Messelement CP25/2. Vorkonditionierung bei 0,5 1/s für 1 min. Danach Messung bei 25 1/s für 1 min. und anschließend 0,5 1/s für weitere 1 Min. Auswertung über Mittelwertbildung aus zwanzig Messpunkten.

Die mechanischen Werte wurden gemäß der ISO 37 an S2-Prüfkörpern bestimmt.

Die Shore-A-Härte wurde gemäß ISO 868 bestimmt.

### Beispiel 1

500 g eines Polydimethylsiloxans mit Dimethoxyvinylsilylendgruppen und einer Viskosität von 8 000 mPa · s, 3,0 g einer Octylphosphonsäuremischung zusammengesetzt aus 25 Gew.-% Trimethoxymethylsilan und 75 Gew.-% Octylphosphonsäure, 20 g Vinyl-triethoxysilan und 15 g N-Aminoethylaminopropyl-trimethoxysilan werden in einem Laborplanetenmischer für eine Dauer von 3 Minuten bei ca. 300 Upm und einem Druck von 200-300 hPa homogenisiert. Anschließend werden 347 g eines gemahlenen, unbeschichteten Marmormehls mit einer mittleren Teilchengröße von 2 µm und 10 g einer hydrophilen, pyrogenen Kieselsäure mit einer spezifischen Oberfläche von 150 m²/g langsam bei einem Druck von 900-1100 hPa eingemischt und 8 Minuten bei 800 Upm bei einem Druck von 200-300 hPa dispergiert. Die so erhaltene fließfähige Mischung wird mit 100 g Isooctyltriethoxysilan und 2,5 g eines Zinnkatalysators, der hergestellt wurde durch Umsetzung von 1,4 g Di-n-butylzinnoxid und 1,1 g Tetraethoxysilan, 3 Minuten bei 300 Upm und einem Druck von 200-300 hPa aktiviert und blasenfrei gerührt.

Ein Teil der so hergestellten Masse wurde zur Aufbewahrung in Kartuschen abgefüllt und vor den weiteren Prüfungen 24 Stunden bei 23°C und 50% rel. Luftfeuchtigkeit gelagert sowie ein anderer Teil der hergestellten Masse in innenlackierte Aluminiumtuben abgefüllt und 4 Wochen bei 70°C im Trockenschrank gelagert.

Bei den so erhaltenen Massen werden danach wie oben beschrieben die Hautbildungszeit und Vulkanisation untersucht. Die Oberfläche wird durch einen einfachen Test mit dem Finger oder dem Rücken des Zeigefingers auf Klebrigkeit geprüft. Soweit der Finger ohne Verzögerung sich wieder ablöst wird positiv bewertet. Die Ergebnisse finden sich in Tabelle 1.

### Beispiel 2

Die in Beispiel 1 beschriebene Arbeitsweise wird wiederholt mit der Abänderung, dass 100g Isooctyltrimethoxysilan anstelle des Isooctyltriethoxysilan eingesetzt werden.

Die Ergebnisse finden sich in Tabelle 1.

### Beispiel 3

Die in Beispiel 1 beschriebene Arbeitsweise wird wiederholt mit der Abänderung, dass 100g Hexadecyltrimethoxysilan anstelle des Isooctyltriethoxysilan eingesetzt werden.

Die Ergebnisse finden sich in Tabelle 1.

### Vergleichsbeispiel V1

Die in Beispiel 1 beschriebene Arbeitsweise wird wiederholt mit der Abänderung, dass 100g isoparafinischen Kohlenwasserstoffs (Flammpunkt > 90°C, Viskosität 3,5 cSt/25°C) als Lösungsmittel anstelle des Isooctyltriethoxysilan eingesetzt werden.

Die Ergebnisse finden sich in Tabelle 1.

**Tabelle 1:**

| **Beispiel** | **1** | **2** | **3** | **V1** |
|---|---|---|---|---|
| **Pasteneigenschaften** | | | | |
| HBZ [min] nach 24 h Lagerung | 10 | 18 | 15 | 7 |
| HBZ [min] nach 4 Wochen/70°C Lagerung | 13 | 22 | 20 | 10 |
| Oberfläche nach 24 h Härtung | positiv | positiv | positiv | positiv |
| Vulkanisat nach 24 h Härtung | positiv | leicht brüchig | positiv | positiv |

| **Viskosität / 25°C** [mPas] | | | | |
|---|---|---|---|---|
| Scherrate 25 1/s | 8 000 | 7 500 | 8 500 | 8 000 |
| Scherrate 25 1/s | 27 000 | 26 000 | 27 000 | 34 000 |

| | | | | |
|---|---|---|---|---|
| HBZ = Hautbildungzeit | | | | |

### Beispiel 4

500 g eines Polydimethylsiloxans mit Dimethoxyvinylsilylendgruppen und einer Viskosität von 8 000 mPa·s, 3,0 g einer Octylphosphonsäuremischung zusammengesetzt aus 25 Gew.-% Trimethoxymethylsilan und 75 Gew.-% Octylphosphonsäure, 20 g Vinyltriethoxysilan und 15 g N-Aminoethylaminopropyl-trimethoxysilan werden in einem Laborplanetenmischer für eine Dauer von 3 Minuten bei ca. 300 Upm und einem Druck von 200-300hPa homogenisiert. Anschließend werden 347 g eines gemahlenen, unbeschichteten Marmormehls mit einer mittleren Teilchengröße von 2µm und 10 g einer hydrophilen, pyrogenen Kieselsäure mit einer spezifischen Oberfläche von 150 m²/g langsam bei einem Druck von 900-1100hPa eingemischt und 8 Minuten bei 800 Upm bei einem Druck von 200-300 hPa dispergiert. Die so erhaltene fließfähige Mischung wird mit 50g Isooctyltriethoxysilan und 5,0 g eines Zinnkatalysators, der hergestellt wurde durch Umsetzung von 0,9 g Di-n-octylzinnoxid und 2,1 g Tetraethoxysilan und 2,0 g Aminopropyltriethoxysilan, 3 Minuten bei 300 Upm und einem Druck von 200-300 hPa aktiviert und blasenfrei gerührt.

Die so hergestellte Masse wurde wie in Beispiel 1 beschrieben in Kartuschen abgefüllt und gelagert.

Bei den so erhaltenen Massen werden danach wie oben beschrieben die Hautbildungszeit, Vulkanisation und Oberflächenklebrigkeit untersucht. Die Massen werden weiterhin 14 Tage bei 23°C und 50% rel. Luftfeuchtigkeit vernetzen gelassen und die Mechanik sowie Shore-Härten nach ISO 37 bzw. ISO 868 bestimmt. Die Ergebnisse finden sich in Tabelle 2.

### Beispiel 5

Die in Beispiel 4 beschriebene Arbeitsweise wird wiederholt mit der Abänderung, dass anstelle von 50g Isooctyltriethoxysilan 100 g Isooctyltriethoxysilan eingemischt werden. Die Ergebnisse finden sich in Tabelle 2.

### Beispiel 6

Die in Beispiel 4 beschriebene Arbeitsweise wird wiederholt mit der Abänderung, dass anstelle von 50g Isooctyltriethoxysilan 200 g Isooctyltriethoxysilan eingemischt werden.

Die Ergebnisse finden sich in Tabelle 2.

### Vergleichsbeispiel V2

Die in Beispiel 4 beschriebene Arbeitsweise wird wiederholt mit der Abänderung, dass kein Isooctyltriethoxysilan eingemischt wird.

Die Ergebnisse finden sich in Tabelle 2.

### Vergleichsbeispiel V3

Die in Beispiel 4 beschriebene Arbeitsweise wird wiederholt mit der Abänderung, dass 100g Tetraethoxysilan statt des Isooctyltriethoxysilans mit dem Katalysator eingemischt werden.

Die Ergebnisse finden sich in Tabelle 2.

### Vergleichsbeispiel V4

Die in Beispiel 4 beschriebene Arbeitsweise wird wiederholt mit der Abänderung, dass 100g oligomerisiertes Tetraethoxysilan mit einem SiO₂-Gehalt von ca. 40 Gew-% statt des Isooctyltriethoxysilans mit dem Katalysator eingemischt werden.

Die Ergebnisse finden sich in Tabelle 2.

**Tabelle 2:**

| | | | | | | |
|---|---|---|---|---|---|---|
| **Beispiele** | **4** | **5** | **6** | **V2** | **V3** | **V4** |

| **Pasteneigenschaften** | | | | | | |
|---|---|---|---|---|---|---|
| HBZ [min] nach 24 h Lagerung | 8 | 8 | 8 | 8 | 15 | 15 |
| Oberfläche nach 24 h Härtung | pos. | pos. | pos. | pos. | neg. klebrig | neg. klebrig |
| Vulkanisat nach 24 h Härtung | pos. | pos. | pos. | pos. | neg. brüchig | neg. nicht gehärtet |

| **Viskosität / 25°C** [mPas] | | | | | | |
|---|---|---|---|---|---|---|
| Scherrate 25 1/s | 14 500 | 8 500 | 3 000 | 28 000 | 7 000 | 12 000 |
| Scherrate 25 1/s | 48 000 | 30 000 | 10 000 | 100 000 | 27 000 | 50 000 |

| **Mechanische Eigenschaften Folie nach ISO 37-S2** | | | | | | |
|---|---|---|---|---|---|---|
| Shore A | 42 | 41 | 27 | 48 | 47 | n.m. |
| RF - MPa | 1,9 | 1,5 | 1,5 | 2,0 | 1,5 | n.m. |
| RD - % | 140 | 150 | 160 | 120 | 60 | n.m. |

| | | | | | | |
|---|---|---|---|---|---|---|
| HBZ = Hautbildungszeit RF = Reißfestigkeit RD = Reißdehnung n.m. = nicht messbar | | | | | | |

## Patentansprüche

1. Vernetzbare Massen enthaltend
(A) Organyloxygruppen aufweisende Organopolysiloxane aus Einheiten der Formel (I)
RₐR¹_{b}(OR²)_{c}SiO_{(4-a-b-c)/2} (I),
wobei
R gleich oder verschieden sein kann und einwertige, SiC-gebundene, gegebenenfalls substituierte, von aliphatischen Kohlenstoff-Kohlenstoff-Mehrfachbindungen freie Kohlenwasserstoffreste darstellt,
R¹ gleich oder verschieden sein kann und einwertige, SiC-gebundene, gegebenenfalls substituierte Kohlenwasserstoffreste mit aliphatischen Kohlenstoff-Kohlenstoff-Mehrfachbindungen bedeutet,
R² gleich oder verschieden sein kann und einwertige, gegebenenfalls substituierte Kohlenwasserstoffreste, die durch Sauerstoffatome unterbrochen sein können, bedeutet,
a 0, 1, 2 oder 3 ist,
b 0 oder 1 ist und
c 0, 1, 2 oder 3 ist,
mit der Maßgabe, dass in Formel (I) die Summe a+b+c≤3 ist und in mindestens einer Einheit c verschieden 0 ist,
(B) Organosiliciumverbindungen der Formel (II)
(R⁴O)_{d}SiR³_{(4-d)} (II),
wobei
R³ gleich oder verschieden sein kann und einwertige, SiCgebundene, aliphatische, gegebenenfalls durch Ethergruppen, Estergruppen, (Poly)glykolreste oder Triorganyloxysilylgruppen substituierte Kohlenwasserstoffreste mit 1 bis 7 Kohlenstoffatomen oder aromatische Reste bedeutet,
R⁴ gleich oder verschieden sein kann und Wasserstoffatom oder einwertige, gegebenenfalls substituierte Kohlenwasserstoffreste, die durch Sauerstoffatome unterbrochen sein können, bedeutet,
d 2, 3 oder 4 ist,
und/oder deren Teilhydrolysate,
(C) basischen Stickstoff aufweisende Organosiliciumverbindungen der Formel (III)
(R⁶O)ₑSiR⁵₍₄ₑ₎ (III),
wobei
R⁵ gleich oder verschieden sein kann und einwertige, SiC-gebundene Reste mit basischem Stickstoff bedeutet,
R⁶ gleich oder verschieden sein kann und Wasserstoffatom oder einwertige, gegebenenfalls substituierte Kohlenwasserstoffreste, die durch Sauerstoffatome unterbrochen sein können, bedeutet,
e 2 oder 3 ist,
und/oder deren Teilhydrolysate
und
(D) Organosiliciumverbindungen der Formel (IV)
(R⁸O)ₕSiR⁷₍₄₋ₕ₎ (IV),
wobei
R⁷ gleich oder verschieden sein kann und einwertige, SiC-gebundene, aliphatische, gegebenenfalls mit Ethergruppen, Estergruppen, (Poly)glykolresten oder Triorganyloxysilylgruppen substituierte Kohlenwasserstoffreste mit mindestens 8 Kohlenstoffatomen bedeutet,
R⁸ gleich oder verschieden sein kann und Wasserstoffatom oder einwertige, gegebenenfalls substituierte Kohlenwasserstoffreste, die durch Sauerstoffatome unterbrochen sein können, bedeutet,
h 2 oder 3 ist,
und/oder deren Teilhydrolysate.

2. Vernetzbare Massen gemäß Anspruch 1, **dadurch gekennzeichnet, dass** es sich bei Organopolysiloxanen (A) um im Wesentlichen lineare, organyloxyterminierte Organopolysiloxane der Formel (V)
(OR²)_{3-f}R¹_{f}Si-(SiR₂-O)_{g}-SiR¹_{f}(OR²)_{3-f} (V)
handelt, wobei
R, R¹ und R² jeweils gleich oder verschieden sein können und eine der oben angegebenen Bedeutungen haben,
g gleich 30 bis 5000 ist und
f gleich 0, 1 oder 2 ist,
mit der Maßgabe, dass in Formel (V) in mindestens einer Einheit f verschieden 0 ist.

3. Vernetzbare Massen gemäß Anspruch 1 oder 2, **dadurch gekennzeichnet, dass** es sich bei Organopolysiloxanen (A) um
(MeO)₂MeSiO[SiMe₂O]₂₀₀₋₂₀₀₀SiMe(OMe)₂,
(MeO)₂MeSiO[SiMe₂O]₂₀₀₋₂₀₀₀SiMe(OMe)₂,
(MeO)₂ViSiO[SiMe₂O]₂₀₀₋₂₀₀₀SiVi (OMe),
(MeO)₂MeSiO[SiMe₂O]₂₀₀₋₂₀₀₀SiViMe(OMe),
(MeO)ViMeSiO[SiMe₂O]₂₀₀₋₂₀₀₀SiViMe(OMe) oder
(MeO)ViMeSiO[SiMe₂O]₂₀₀₋₂₀₀₀SiVi(OMe)₂ handelt.

4. Vernetzbare Massen gemäß einem oder mehreren der Ansprüche 1 bis 3, **dadurch gekennzeichnet, dass** Organosiliciumverbindung (D) mindestens einen Rest R⁸ mit mindestens zwei Kohlenstoff - atomen aufweist.

5. Vernetzbare Massen gemäß einem oder mehreren der Ansprüche 1 bis 4, **dadurch gekennzeichnet, dass** es sich bei Organosiliciumverbindungen (D) um Hexadecyl-trimethoxysilan, Hexadecyl-triethoxysilan, n-Octyltrimethoxysilan, n-Ooctyltriethoxysilan, Isooctyltrimethoxysilan oder Isooctyltriethoxysilan und/oder deren Teilhydrolysate handelt.

6. Vernetzbare Massen gemäß einem oder mehreren der Ansprüche 1 bis 5, **dadurch gekennzeichnet, dass** das Gewichtsverhältnis von Komponente (B) zu Komponente (C) im Bereich von 2:1 bis 1:2 liegt.

7. Vernetzbare Massen gemäß einem oder mehreren der Ansprüche 1 bis 6, **dadurch gekennzeichnet, dass** es sich um solche handelt enthaltend
(A) Organopolysiloxane aus Einheiten der Formel (I),
(B) Organosiliciumverbindungen der Formel (II) mit mindestens einem R⁴ gleich Methyl- oder Ethylrest und/oder deren Teilhydrolysate,
(C) basischen Stickstoff aufweisende Organosiliciumverbindungen der Formel (III) und/oder deren Teilhydrolysate,
(D) Organosiliciumverbindungen der Formel (IV) mit mindestens einem R⁸ gleich Ethylrest und/oder deren Teilhydrolysate,
gegebenenfalls (E) Füllstoffe,
gegebenenfalls (F) Katalysatoren,
gegebenenfalls (G) Stabilisatoren,
gegebenenfalls (H) Additive und
gegebenenfalls (J) Weichmacher.

8. Vernetzbare Massen gemäß einem oder mehreren der Ansprüche 1 bis 7, **dadurch gekennzeichnet, dass** es sich um solche handelt enthaltend
(A) Organopolysiloxane der Formel (V) mit R¹ gleich Vinylrest,
(B) Organosiliciumverbindungen der Formel (II) mit mindestens einem R⁴ gleich Methyl- oder Ethylrest und/oder deren Teilhydrolysate,
(C) basischen Stickstoff aufweisende Organosiliciumverbindungen der Formel (III) ausgewählt aus N-(2-Aminoethyl)-3-aminopropyl-trimethoxysilan und N-(2-Aminoethyl)-3-aminopropyl-triethoxysilan und deren Teilhydrolysate,
(D) Organosiliciumverbindungen der Formel (IV) mit R⁷ gleich einem Alkylrest mit 8 bis 16 Kohlenstoffatomen und mindestens einem R⁸ gleich Ethylrest und/oder deren Teilhydrolysate, gegebenenfalls (E) Füllstoffe,
gegebenenfalls (F) Katalysatoren,
(G) Stabilisatoren,
gegebenenfalls (H) Additive und
(J) Weichmacher,
mit der Maßgabe, dass das Gewichtsverhältnis von Komponente (B) zu Komponente (C) vorzugsweise im Bereich von 2:1 bis 1:2 liegt.

9. Verfahren zur Herstellung der vernetzbaren Massen gemäß einem oder mehreren der Ansprüche 1 bis 8, **dadurch gekennzeichnet, dass** alle Bestandteile in beliebiger Reihenfolge miteinander vermischt werden.

10. Formkörper, hergestellt durch Vernetzung der Massen gemäß einem oder mehreren der Ansprüche 1 bis 8.

11. Formkörper gemäß Anspruch 10, **dadurch gekennzeichnet, dass** es sich um Beschichtungen handelt.

## Claims

1. Crosslinkable compositions comprising
(A) organopolysiloxanes containing organyloxy groups and composed of units of the formula (I)
RₐR¹_{b}(OR²)_{c}SiO_{(4-a-b-c)/2} (I),
where
R may be identical or different and represents monovalent, SiC-bonded, optionally substituted hydrocarbyl radicals that are free from aliphatic carbon-carbon multiple bonds,
R¹ may be identical or different and denotes monovalent, SiC-bonded, optionally substituted hydrocarbyl radicals having aliphatic carbon-carbon multiple bonds,
R² may be identical or different and denotes monovalent, optionally substituted hydrocarbyl radicals, which may be interrupted by oxygen atoms,
a is 0, 1, 2 or 3,
b is 0 or 1, and
c is 0, 1, 2 or 3,
with the proviso that in formula (I) the sum a+b+c<3 and c is other than 0 in at least one unit,
(B) organosilicon compounds of the formula (II)
(R⁴O)_{d}SiR³_{(4-d)} (II),
where
R³ may be identical or different and denotes monovalent, SiC-bonded, aliphatic hydrocarbyl radicals optionally substituted by ether groups, ester groups, (poly)glycol radicals or triorganyloxysilyl groups and having 1 to 7 carbon atoms, or aromatic radicals,
R⁴ may be identical or different and denotes hydrogen atom or monovalent, optionally substituted hydrocarbyl radicals, which may be interrupted by oxygen atoms,
d is 2, 3 or 4,
and/or their partial hydrolysates,
(C) organosilicon compounds containing basic nitrogen and of the formula (III)
(R⁶O)ₑSiR⁵₍₄-ₑ₎ (III),
where
R⁵ may be identical or different and denotes monovalent, SiC-bonded radicals containing basic nitrogen,
R⁶ may be identical or different and denotes hydrogen atom or monovalent, optionally substituted hydrocarbyl radicals, which may be interrupted by oxygen atoms,
e is 2 or 3,
and/or their partial hydrolysates
and
(D) organosilicon compounds of the formula (IV)
(R⁸O)ₕSiR⁷₍₄₋ₕ₎ (IV),
where
R⁷ may be identical or different and denotes monovalent, SiC-bonded, aliphatic hydrocarbyl radicals optionally substituted by ether groups, ester groups, (poly)glycol radicals or triorganyloxysilyl groups and having at least 8 carbon atoms,
R⁸ may be identical or different and denotes hydrogen atom or monovalent, optionally substituted hydrocarbyl radicals, which may be interrupted by oxygen atoms,
h is 2 or 3,
and/or their partial hydrolysates.

2. Crosslinkable compositions according to Claim 1, **characterized in that** organopolysiloxanes (A) are substantially linear, organyloxyterminated organopolysiloxanes of the formula (V)
(OR²)_{3-f}R¹_{f}Si-(SiR₂-O)_{g}-SiR¹f(OR²)_{3-f} (V)
where
R, R¹ and R² may each be identical or different, and have one of the definitions stated above,
g is 30 to 5000, and
f is 0, 1 or 2,
with the proviso that in formula (V) f is other than 0 in at least one unit.

3. Crosslinkable compositions according to Claim 1 or 2, **characterized in that** organopolysiloxanes (A) are
(MeO)₂MeSiO[SiMe₂O]₂₀₀₋₂₀₀₀SiMe(OMe)₂,
(MeO)₂MeSiO[SiMe₂O]₂₀₀₋₂₀₀₀SiVi(OMe)₂,
(MeO)₂ViSiO[SiMe₂O]₂₀₀₋₂₀₀₀SiVi(OMe) ₂,
(MeO)₂MeSiO[SiMe₂O]₂₀₀₋₂₀₀₀SiViMe(OMe),
(MeO)ViMeSiO[SiMe₂O]₂₀₀₋₂₀₀₀SiViMe(OMe) or
(MeO)ViMeSiO[SiMe₂O]₂₀₀₋₂₀₀₀SiVi(OMe)₂.

4. Crosslinkable compositions according to one or more of Claims 1 to 3, **characterized in that** organosilicon compound (D) has at least one radical R⁸ having at least two carbon atoms.

5. Crosslinkable compositions according to one or more of Claims 1 to 4, **characterized in that** organosilicon compounds (D) are hexadecyltrimethoxysilane, hexadecyltriethoxysilane, n-octyltrimethoxysilane, n-octyltriethoxysilane, isooctyltrimethoxysilane or isooctyltriethoxysilane and/or their partial hydrolysates.

6. Crosslinkable compositions according to one or more of Claims 1 to 5, **characterized in that** the weight ratio of component (B) to component (C) is in the range from 2:1 to 1:2.

7. Crosslinkable compositions according to one or more of Claims 1 to 6, **characterized in that** they are those comprising
(A) organopolysiloxanes composed of units of the formula (I),
(B) organosilicon compounds of the formula (II) having at least one methyl or ethyl radical R⁴ and/or their partial hydrolysates,
(C) organosilicon compounds containing basic nitrogen and of the formula (III) and/or their partial hydrolysates,
(D) organosilicon compounds of the formula (IV) having at least one ethyl radical R⁸ and/or their partial hydrolysates,
optionally (E) fillers,
optionally (F) catalysts,
optionally (G) stabilizers,
optionally (H) additives and
optionally (J) plasticizers.

8. Crosslinkable compositions according to one or more of Claims 1 to 7, **characterized in that** they are those comprising
(A) organopolysiloxanes of the formula (V) with vinyl radical R¹,
(B) organosilicon compounds of the formula (II) having at least one methyl or ethyl radical R⁴ and/or their partial hydrolysates,
(C) organosilicon compounds containing basic nitrogen and of the formula (III) selected from N-(2-aminoethyl)-3-aminopropyltrimethoxysilane and N-(2-aminoethyl)-3-aminopropyltriethoxysilane and their partial hydrolysates,
(D) organosilicon compounds of the formula (IV) having an alkyl radical R⁷ having 8 to 16 carbon atoms and at least one ethyl radical R⁸ and/or their partial hydrolysates,
optionally (E) fillers,
optionally (F) catalysts,
(G) stabilizers,
optionally (H) additives and
(J) plasticizers,
with the proviso that the weight ratio of component (B) to component (C) is preferably in the range from 2:1 to 1:2.

9. Method for producing the crosslinkable compositions according to one or more of Claims 1 to 8, **characterized in that** all of the constituents are mixed with one another in any order.

10. Moldings produced by crosslinking the compositions according to one or more of Claims 1 to 8.

11. Moldings according to Claim 10, **characterized in that** they are coatings.

## Revendications

1. Masses réticulables contenant
(A) des organopolysiloxanes présentant des groupes organyloxy, composés de motifs de formule (I) RₐR
¹_{b}(OR²)_{c}SiO_{(4-a-b-c)/2} (I),
R pouvant être identique ou différent et représentant des radicaux hydrocarbonés monovalents, liés par SiC, éventuellement substitués, exempts de liaisons multiples carbone-carbone aliphatiques,
R¹ pouvant être identique ou différent et signifiant des radicaux hydrocarbonés monovalents, liés par SiC, éventuellement substitués, comportant des liaisons multiples carbone-carbone aliphatiques,
R² pouvant être identique ou différent et signifiant des radicaux hydrocarbonés monovalents, éventuellement substitués, qui peuvent être interrompus par des atomes d'oxygène,
a étant 0, 1, 2 ou 3,
b étant 0 ou 1 et
c étant 0, 1, 2 ou 3,
étant entendu que dans la formule (I) la somme a + b + c est ≤ 3 et dans au moins un motif, c est différent de 0,
(B) des composés d'organosilicium de formule (II) (R⁴
O)_{d}SiR³_{(4-d)} (II),
R³ pouvant être identique ou différent et signifiant des radicaux hydrocarbonés monovalents, liés par SiC, aliphatiques, substitués éventuellement par des groupes éther, des groupes ester, des radicaux (poly)glycol ou des groupes triorganyloxysilyle, comportant 1 à 7 atomes de carbone ou des radicaux aromatiques,
R⁴ pouvant être identique ou différent et signifiant un atome d'hydrogène ou des radicaux hydrocarbonés monovalents, éventuellement substitués, qui peuvent être interrompus par des atomes d'oxygène,
d étant 2, 3 ou 4,
et/ou leurs hydrolysats partiels,
(C) des composés de type organosilicium présentant un azote basique, de formule (III)
(R⁶O)ₑSiR⁵₍₄₋ₑ₎ (III),
R⁵ pouvant être identique ou différent et signifiant des radicaux monovalents, liés par SiC, comportant un azote basique,
R⁶ pouvant être identique ou différent et signifiant un atome d'hydrogène ou des radicaux hydrocarbonés monovalents, éventuellement substitués, qui peuvent être interrompus par des atomes d'oxygène,
e étant 2 ou 3,
et/ou leurs hydrolysats partiels
et
(D) des composés de type organosilicium de formule (IV)
(R⁸O)ₕSiR⁷₍₄₋ₕ₎ (IV),
R⁷ pouvant être identique ou différent et signifiant des radicaux hydrocarbonés monovalents, liés par SiC, aliphatiques, substitués éventuellement par des groupes éther, des groupes ester, des radicaux (poly)glycol ou des groupes triorganyloxysilyle, comportant au moins 8 atomes de carbone,
R⁸ pouvant être identique ou différent et signifiant un atome d'hydrogène ou des radicaux hydrocarbonés monovalents, éventuellement substitués, qui peuvent être interrompus par des atomes d'oxygène,
h étant 2 ou 3,
et/ou leurs hydrolysats partiels.

2. Masses réticulables selon la revendication 1, **caractérisées en ce que** les organopolysiloxanes (A) sont des organopolysiloxanes essentiellement linéaires, terminés par organyloxy, de formule (V)
(OR²)_{3-f}R¹_{f}Si-(SiR₂-O)_{g}-SiR¹f(OR²)₃-_{f} (V),
R, R¹ et R² pouvant à chaque fois être identiques ou différents et possédant l'une des significations mentionnées ci-dessus,
g étant égal à 30 à 5 000 et
f étant égal à 0, 1 ou 2,
étant entendu que dans la formule (V), dans au moins un motif, f est différent de 0.

3. Masses réticulables selon la revendication 1 ou 2, **caractérisées en ce que** les organopolysiloxanes (A) sont
(MeO)₂MeSiO[SiMe₂O]₂₀₀₋₂₀₀₀SiMe(OMe)₂,
(MeO)₂MeSiO[SiMe₂O]₂₀₀₋₂₀₀₀SiVi(OMe)₂,
(MeO)₂ViSiO[SiMe₂O]₂₀₀₋₂₀₀₀SiVi(OMe)₂,
(MeO)₂MeSiO[SiMe₂O]₂₀₀₋₂₀₀₀SiViMe(OMe),
(MeO)ViMeSiO[SiMe₂O]₂₀₀₋₂₀₀₀SiViMe(OMe)ou
(MeO)ViMeSiO[SiMe₂O]₂₀₀₋₂₀₀₀SiVi(OMe)₂.

4. Masses réticulables selon l'une ou plusieurs des revendications 1 à 3, **caractérisées en ce que** le composé de type organosilicium (D) présente au moins un radical R⁸ comportant au moins deux atomes de carbone.

5. Masses réticulables selon l'une ou plusieurs des revendications 1 à 4, **caractérisées en ce que** les composés de type organosilicium (D) sont l'hexadécyl-triméthoxysilane, l'hexadécyl-triéthoxysilane, le n-octyl-triméthoxysilane, le n-octyl-triéthoxysilane, l'isooctyltriméthoxysilane ou l'isooctyltriéthoxysilane et/ou leurs hydrolysats partiels.

6. Masses réticulables selon l'une ou plusieurs des revendications 1 à 5, **caractérisées en ce que** le rapport en poids du composant (B) sur le composant (C) se situe dans la plage de 2:1 à 1:2.

7. Masses réticulables selon l'une ou plusieurs des revendications 1 à 6, **caractérisées en ce que** ce sont des masses réticulables contenant
(A) des organopolysiloxanes composés de motifs de formule (I),
(B) des composés de type organosilicium de formule (II) avec au moins un R⁴ égal à un radical méthyle ou éthyle et/ou leurs hydrolysats partiels,
(C) des composés de type organosilicium présentant un azote basique, de formule (III) et/ou leurs hydrolysats partiels,
(D) des composés de type organosilicium de formule (IV) comportant au moins un R⁸ égal à un radical éthyle et/ou leurs hydrolysats partiels,
éventuellement (E) des charges,
éventuellement (F) des catalyseurs,
éventuellement (G) des stabilisants,
éventuellement (H) des additifs et
éventuellement (J) des plastifiants.

8. Masses réticulables selon l'une ou plusieurs des revendications 1 à 7, **caractérisées en ce que** ce sont des masses réticulables contenant
(A) des organopolysiloxanes de formule (V) avec R¹ égale à un radical vinyle,
(B) des composés de type organosilicium de formule (II) avec au moins un R⁴ égal à un radical méthyle ou éthyle et/ou leurs hydrolysats partiels,
(C) des composés de type organosilicium présentant un azote basique, de formule (III), choisis parmi le N-(2-aminoéthyl)-3-aminopropyl-triméthoxysilane et le N-(2-aminoéthyl)-3-aminopropyl-triéthoxysilane et leurs hydrolysats partiels,
(D) des composés de type organosilicium de formule (IV) avec R⁷ égal à un radical alkyle comportant 8 à 16 atomes de carbone et au moins un R⁸ égal à un radical éthyle et/ou leurs hydrolysats partiels,
éventuellement (E) des charges,
éventuellement (F) des catalyseurs,
(G) des stabilisants,
éventuellement (H) des additifs et
(J) des plastifiants,
étant entendu que le rapport en poids du composant (B) sur le composant (C) se situe de préférence dans la plage de 2:1 à 1:2.

9. Procédé pour la préparation de masses réticulables selon l'une ou plusieurs des revendications 1 à 8, **caractérisé en ce que** tous les ingrédients sont mélangés ensemble dans un ordre quelconque.

10. Corps moulés, préparés par réticulation des masses selon l'une ou plusieurs des revendications 1 à 8.

11. Corps moulés selon la revendication 10, **caractérisés en ce que** ce sont des revêtements.
